# EUROPÄISCHE PATENTSCHRIFT

(11) **EP 2 959 087 B1**
(45) Veröffentlichungstag und Bekanntmachung des Hinweises auf die Patenterteilung: **24.01.2018**
(21) Anmeldenummer: 15705477.6
(22) Anmeldetag: 26.01.2015
(51) Int. Cl.: E06B 3/673, B65G 49/06

(54) **FÖRDERVORRICHTUNG**
CONVEYING DEVICE
DISPOSITIF DE TRANSPORT

(30) Priorität: 28.01.2014 AT 582014
(43) Veröffentlichungstag der Anmeldung: 30.12.2015
(73) Patentinhaber: LISEC Austria GmbH, 3353 Seitenstetten (AT)
(72) Erfinder: MADER, Leopold, A-3364 Neuhofen/Ybbs (AT)
(74) Vertreter: Beer & Partner Patentanwälte KG
(86) Internationale Anmeldenummer: PCT/AT2015/000009
(87) Internationale Veröffentlichungsnummer: WO 2015/113081

(56) Entgegenhaltungen:
- WO-A1-2005/105541
- WO-A2-2013/056288
- DE-A1- 3 345 940
- US-A1- 2011 318 144

## Beschreibung

Die Erfindung betrifft eine Vorrichtung zum Herstellen von Isolierglas-Rohlingen mit einer Versiegelungsstation und einer Vorrichtung zum Transportieren der Isolierglas-Rohlinge.

Beim Herstellen von Isolierglas werden Scheibenpakete ("Isolierglas-Rohlinge"), umfassend wenigstens zwei Glasscheiben und einen zwischen diesen angeordneten Abstandhalter ("Spacer"), hergestellt. Der Abstandhalter kann aus einer Hohlprofilleiste aus Metall oder aus Kunststoff bestehen oder ein Strang aus thermoplastischem oder elastoplastischem Werkstoff sein. Dabei wird ein Abstandhalter auf eine Glasscheibe angesetzt und auf den Abstandhalter in einer Zusammenbaustation eine zweite Glasscheibe aufgesetzt, sodass ein Isolierglas-Rohling gebildet wird. Isolierglas-Rohlinge sind noch nicht stabil, da der Randverbund erst fertig ist, nachdem der Isolierglas-Rohling versiegelt worden ist und die Versiegelungsmasse abgebunden hat. Daher müssen Isolierglas-Rohlinge vorsichtig transportiert werden, um ein Versetzen der Glasscheiben und gegebenenfalls ein Verformen des Abstandhalters zu vermeiden.

Es ist bekannt und beim Herstellen von Isolierglas üblich, die zwischen den Glasscheiben und außerhalb des Abstandhalters liegende, nach außen offene Randfuge von Isolierglas-Rohlingen mit Versiegelungsmasse zu füllen (zu versiegeln), um den endgültigen Randverbund der Glasscheiben des Isolierglases zu erzielen.

Für das Versiegeln von Isolierglas-Rohlingen sind verschiedene Vorschläge betreffend Verfahren und Vorrichtung gemacht worden.

Insbesondere ist es problematisch, die Isolierglas-Rohlinge während und nach dem Versiegeln zu transportieren, da Versiegelungsmasse, so lange sie nicht ausgehärtet ist, sehr klebrig ist und Transportmittel, die am (unteren) Rand der versiegelten Isolierglas-Rohlinge angreifen, verschmutzt. Um dieses Problem zu lösen, sind Vorschläge für spezielle Ausbildungen von Fördermitteln gemacht worden (vgl. z.B. AT 384 596 B, EP 0 122 405 A, EP 0 857 848 A und DE 34 00 031 C).

Wesentlich für das Handhaben (Transportieren, Umsetzen, Abstapeln) von Isolierglas-Rohlingen vor und nach dem Versiegeln ist es, dass beide Glasscheiben unterstützt werden, damit sich das den Isolierglas-Rohling bildende Paket aus wenigstens zwei Glasscheiben und Abstandhalter durch Bewegen, z.B. Absinken, einer der Glasscheiben oder des Abstandhalters nicht verformt.

Aus der US 2011/0318144 A ist eine Vorrichtung zum Umsetzen von Substraten, die Bestandteile von Displays sein können, bekannt. Bei der bekannten Vorrichtung werden horizontal ausgerichtete, also liegende, Substrate mit Hilfe von Robotern zwischen Bearbeitungsstationen bewegt. Die Roboter umfassen Arme, die um im Wesentlichen lotrechte Achsen verschwenkbar sind. An den Roboterarmen sind Halteeinrichtungen vorgesehen, die Saugköpfe und zusätzlich Klauen aufweisen, um die Substrate festzuhalten.

Die JP 2003-212340 A betrifft eine Vorrichtung zum Transportieren und Halten von Isolierglas, wobei eine Relativbewegung zwischen den Glasscheiben von Isolierglas, während dieses im Wesentlichen lotrecht stehend bewegt wird, vermieden werden soll. Die hierfür vorgesehene Vorrichtung umfasst mit Unterdruck beaufschlagte Saugköpfe und eine Abstützung, die über Auflager an den unteren Rändern der Glasscheiben von Isolierglas angreift.

Die WO 2010/041492 A betrifft eine Vorrichtung zum Handhaben von Glasscheiben, wobei Schutzfolien und Glasscheiben abwechselnd zu Stapeln übereinander gelegt werden. Zum Umsetzen der Glasscheiben von einem Lagerbock auf die Stapelvorrichtung ist ein Roboter vorgesehen, dessen Saugerfeld seitlich mit Anschlägen zum Fixieren der Glasscheiben ausgestattet ist.

Die WO 2005/105541 A offenbart eine Einrichtung zum Handhaben von Glasscheiben, wobei an einem mit Rollen ausgestattetem Gestell Saugköpfe vorgesehen sind. Unterhalb der Saugköpfe sind ein- und ausschwenkbare Auflager für die Glasscheiben angeordnet. Die Saugköpfe sind an Schlitten vorgesehen, die über Führungsschienen auf und ab verstellbar geführt sind. Die Auflager am unteren Ende der Führungsschienen für die Schlitten dienen dazu, eine Glasscheibe aufzufangen, wenn das Hebesystem für die Schlitten versagen sollte.

Die WO 2013/056288 A zeigt eine Anlage zum Versiegeln von Isolierglas-Rohlingen, wobei die Isolierglas-Rohlinge in der Versiegelungsstation unten klemmend durch Greifer und durch seitlich angreifende Saugköpfe gehalten und nicht bewegt werden. Beim Transportieren der Isolierglas-Rohlinge in der Versiegelungsstation werden diese auf Rollen oder Förderbändern stehend bewegt. WO 2013/056288 A beschreibt eine Vorrichtung nach dem Oberbegriff des Anspruchs 1.

Die EP 0 122 405 A zeigt eine Anlage für das Versiegeln von Isolierglas-Rohlingen, wobei die Isolierglas-Rohlinge mit einer Entnahmevorrichtung aus der Versiegelungsstation entfernt werden sollen. Die Entnahmevorrichtung umfasst einen Rahmen, an dem Saugköpfe vorgesehen sind, wobei der Rahmen zwischen einer Position hinter der Versiegelungsstation und einer Entnahmestation verfahrbar ist. Beim Entnehmen von Isolierglas-Rohlingen nach dem Versiegeln mit Hilfe der Entnahmevorrichtung wird der versiegelte Isolierglas-Rohling ausschließlich durch an einer seiner Glasscheiben angreifende Saugköpfe gehalten. Den Isolierglas-Rohling von unten her abstützende Stützelemente sind nicht vorgesehen.

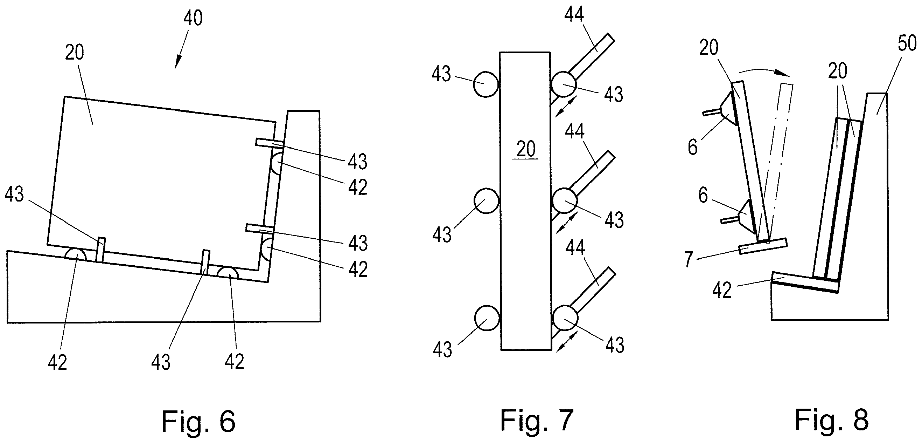

Die EP 2 460 971 A betrifft einen Versiegelungsautomat mit einer Fördereinrichtung, die in zwei Teile geteilt ist, wobei ein Teil die vordere Glasscheibe und der andere Teil die hintere Glasscheibe von Isolierglas bewegen soll. Der hintere Teil ist verstellbar, damit er an die Dicke von Isolierglas und an Stufenglas angepasst werden kann. Der hintere Teil trägt Stützelemente, der vordere Teil trägt Stützelemente. In Fig. 7 bis 10 der 8EP 2 460 971 A ist die Situation beim Entladen von versiegeltem Isolierglas gezeigt. Dabei sollen (vgl. Abs. [0044]) Sauger in die Stellung von Fig. 10 bewegt werden, um Isolierglas auf eine Entnahmeeinrichtung abzustellen. Die Entnahmeeinrichtung weist starre Stützglieder auf (vgl. 6, 8 und 10). Saugköpfe sind an der Entnahmeeinrichtung nicht vorgesehen. Wenn ein Dreischeiben-Isolierglas auf das Entladen wartet, kann die mittlere Glasscheibe durch zurückziehbare Stützelemente (Fig. 15) gehalten werden. Die in Fig. 18 gezeigten Stützelemente sollen während des Versiegelns tätig werden. Die EP 2 460 971 A zeigt somit eine Entnahmeeinrichtung mit starren Stützelementen am unteren Rand eines Rahmens. Ein Nachteil dieser Konstruktion ist es, dass die Fördereinrichtung abgesenkt werden muss, wenn die Sauger das Isolierglas umsetzen, so dass dieses von unten her nicht abgestützt ist.

Der Erfindung liegt die Aufgabe zugrunde, eine Vorrichtung der eingangs genannten Gattung zur Verfügung zu stellen, mit der Isolierglas-Rohlinge sicher gehandhabt werden können.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Da bei der erfindungsgemäßen Vorrichtung Stützelemente vorgesehen sind, können mit der erfindungsgemäßen Vorrichtung versiegelte Isolierglas-Rohlinge am Ende der Auslaufstrecke einer Versiegelungsvorrichtung übernommen und auf Lagergestellen oder Lagerböcken abgestellt werden. Dies auch, wenn die den Randverbund von Isolierglas ergebende Versiegelungsmasse noch frisch, also nicht verfestigt, ist.

Dies auch, wenn für das herzustellende Isolierglas Abstandhalter aus einem thermoplastischen Werkstoff verwendet werden.

Da bei der erfindungsgemäßen Vorrichtung im unteren Bereich des Saugerfeldes Stützelemente vorgesehen sind, die in ihrer Wirkstellung von unten her am unteren Rand des Isolierglas-Rohlings anliegen, ist der Isolierglas-Rohling sicher gehalten und die Gefahr, dass die Glasscheibe oder die Glasscheiben des Isolierglas-Rohlings, an welcher/welchen die Sauger des Saugerfeldes nicht angreifen, absinken, ist nicht mehr gegeben.

Insbesondere ist in Betracht gezogen, die erfindungsgemäße Vorrichtung im Anschluss an den Auslauf einer Versiegelungsstation vorzusehen, die so ausgebildet ist, wie dies aus der AT 384 596 B bekannt ist.

Da die bei der erfindungsgemäßen Vorrichtung unterhalb des Saugerfeldes vorgesehenen Abstützelemente in ihre und aus ihrer Wirkstellung beweglich, insbesondere verschwenkbar, sind, kann das Saugerfeld im Bereich des Endes des Auslaufes der Versiegelungsstation angeordnet werden. Nachdem die Sauger den versiegelten Isolierglas-Rohling erfasst haben, kann der versiegelte Isolierglas-Rohling weiterbewegt und aus dem Auslauf der Versiegelungsstation wegbewegt werden. Dabei ist vorgesehen, dass die Abstützelemente, die am unteren Rand des Saugerfeldes angeordnet sind, nach und nach in ihre Wirkstellung bewegt (verschwenkt) werden, sodass sie den sich über den Auslauf der Versiegelungsstation hinaus bewegenden Bereich des Isolierglas-Rohlings unterstützen. Dabei ist vorgesehen, dass die Abstützelemente, die sich gerade außerhalb, d.h. neben dem Auslauf der Versiegelungsstation, befinden, in ihre den Gegenstand, z.B. einen Isolierglas-Rohling, unterstützende Wirkstellung bewegt werden.

Insbesondere unterstützen die Abstützelemente die Glasscheibe eines Isolierglas-Rohlings, an der die Sauger des Saugerfeldes der erfindungsgemäßen Vorrichtung nicht angreifen.

Die erfindungsgemäße Vorrichtung erlaubt es, versiegelte Isolierglas-Rohlinge in Lagerböcken oder Fächerwagen abzustellen.

Bevorzugt sind in Kombination mit der erfindungsgemäßen Vorrichtung Fächerwagen, deren Fächer von Stäben gebildet werden, die an ihren oberen Enden miteinander nicht verbunden sind.

Alternativ ist in Betracht gezogen, zusammen mit der erfindungsgemäßen Vorrichtung Lagerböcke zu verwenden, an denen Anschläge vorgesehen sind, auf welchen versiegelte Isolierglas-Rohlinge aufsitzen. Zusätzlich sind Haltefinger vorgesehen, die an die Außenseite der Glasscheiben von Isolierglas-Rohlingen angelegt werden und so den Isolierglas-Rohling auf dem Lagerbock in einer im Wesentlichen lotrechten Stellung halten.

Die erfindungsgemäße Vorrichtung erlaubt es auch, die Versiegelungsmasse eines Isolierglas-Rohlings, nachdem er den Auslauf der Versiegelungsstation verlassen hat, im Bereich seiner Ecken nachzuarbeiten, falls dies erforderlich ist.

Die beschriebene Ausbildung von Fächerwagen einerseits und Lagerböcken anderseits erlaubt es, dass versiegelte Isolierglas-Rohlinge mit Hilfe der erfindungsgemäßen Vorrichtung problemlos in Fächerwagen eingestellt oder auf Lagerböcken abgestellt werden können, noch bevor sich die Versiegelungsmasse verfestigt hat.

In jedem Fall ist mit der erfindungsgemäßen Vorrichtung die Maßhaltigkeit von Isolierglas-Rohlingen sowohl während ihres Transportes vor und nach dem Versiegeln, als auch nachdem sie nach dem Versiegeln in einen Fächerwagen oder Lagerbock abgestellt worden sind, gesichert.

Dadurch, dass die Abstützelemente am unteren Rand des Saugerfeldes in ihre und aus ihrer Wirkstellung verstellbar sind, können diese nach dem Einstellen eines versiegelten Isolierglas-Rohlings in einen Fächerwagen oder Abstellen auf einen Lagerbock aus ihrer Wirkstellung, in der sie den unteren Rand des,versiegelten Isolierglas-Rohlings untergreifen, wegbewegt werden, sodass das Saugerfeld ohne weiteres nach oben aus dem Fächerwagen oder dem Lagerbock herausbewegt werden kann.

Mit der Erfindung ist auch das Problem gelöst, dass die für Isolierglas-Rohlinge verwendete Versiegelungsmasse für das Verfestigen (Aushärten) einige Zeit (einige Stunden) benötigt. Während dieser Zeit ist der Randverbund des Isolierglas-Rohlings noch nicht fertig, sodass die Gefahr des Verformens des den Isolierglas-Rohling bildenden Paketes aus Abstandhalter und Glasscheiben gegeben ist. Diese Gefahr ist bei Verwendung der erfindungsgemäßen Vorrichtung vermieden, da der versiegelte Isolierglas-Rohling beim Entnehmen aus der Versiegelungsstation bis zum Abstellen auf einen Lagerbock oder in einen Fächerwagen von unten her durch Abstützelemente (beispielsweise Abstützfinger) sicher abgestützt wird.

Mit der erfindungsgemäßen Vorrichtung ergibt sich der Vorteil, dass dem Randverbund eines Isolierglas-Rohlings das Gewicht der mindestens einen nicht von Saugern gehaltenen Scheibe nicht aufgelastet wird - und zwar unmittelbar nach dem Versiegeln, während des Nachbearbeitens der Versiegelung (manuelles oder automatisches Nachbearbeiten von Ecken) und auch beim anschließenden Lagern, somit bei jeder Manipulation, die vor dem Einbringen von Versiegelungsmasse und vor dem Aushärten der Versiegelungsmasse des Randverbundes stattfindet.

Die erfindungsgemäße Vorrichtung hat auch den Vorteil, dass ein Verformen, insbesondere thermoplastischer Abstandhalter, die unmittelbar nach dem Auftragen zum Kriechen neigen, verhindert werden kann.

Weitere Einzelheiten und Merkmale der Erfindung ergeben sich aus der nachstehenden Beschreibung einer bevorzugten Ausführungsform einer Fördervorrichtung am Beispiel ihrer Verwendung nach einer Versiegelungsstation und von zusammen mit der Vorrichtung gemäß der Erfindung verwendbaren Fächerwagen bzw. Lagerböcken. Es zeigt:
- Fig. 1: in Ansicht eine dem Auslauf einer Versiegelungsstation zugeordnete Vorrichtung,
- Fig. 2: einen versiegelten Isolierglas-Rohling am Ende des Auslaufes mit positionierter Vorrichtung,
- Fig. 3: das Übernehmen eines Isolierglas-Rohlings durch die erfindungsgemäße Vorrichtung,
- Fig. 4: einen Isolierglas-Rohling der von einer erfindungsgemäßen Vorrichtung gehalten ist,
- Fig. 5: einen zusammen mit der erfindungsgemäßen Vorrichtung verwendbaren Fächerwagen,
- Fig. 6 und 7: in zwei verschiedenen Ansichten einen zusammen mit der Vorrichtung gemäß der Erfindung verwendbaren Lagerbock und
- Fig. 8: einen zusammen mit der erfindungsgemäßen Vorrichtung verwendbaren Stapelbock.

Eine erfindungsgemäße Vorrichtung 1 umfasst ein Saugerfeld 2, das an einem im Wesentlichen lotrecht ausgerichteten Arm 3, der über einen Schlitten 4 entlang einer horizontal ausgerichteten Führungsschiene 5 verfahrbar ist, angeordnet ist. Im gezeigten Ausführungsbeispiel umfasst das Saugerfeld 2 mehrere Sauger 6, wobei Maßnahmen getroffen sind, dass nur die Sauger 6 mit Unterdruck beaufschlagt werden, die sich im Bereich eines versiegelten Isolierglas-Rohlings 20 befinden.

Das Saugerfeld 2 kann auch an einem Roboterarm, beispielsweise einem sphärischen Roboterarm oder einem Knickroboterarm, nach mehreren Freiheitsgraden beweglich angeordnet sein.

Die Sauger 6 des Saugerfeldes 2 sind zurückziehbar ausgeführt, damit Sauger 6 nicht an die Kante des Isolierglas-Rohlings 20 stoßen, wenn das Saugerfeld 2 breiter als der Isolierglas-Rohling 20 ist (Gefahr des Verschmutzens eines Saugers 6 durch Versiegelungsmasse).

Am unteren Rand des Saugerfeldes 2 sind im gezeigten Ausführungsbeispiel Stützfinger 7 umfassende Stützelemente 8 vorgesehen, die um zur Ebene des Saugerfeldes 2 parallele Achsen (im Wesentlichen lotrechte Achsen) in ihre quer zur Ebene des Saugerfeldes 2 ausgerichtete Wirkstellung und aus dieser Wirkstellung in eine parallel zum Saugerfeld 2 ausgerichtete Bereitschaftstellung verschwenkt werden können.

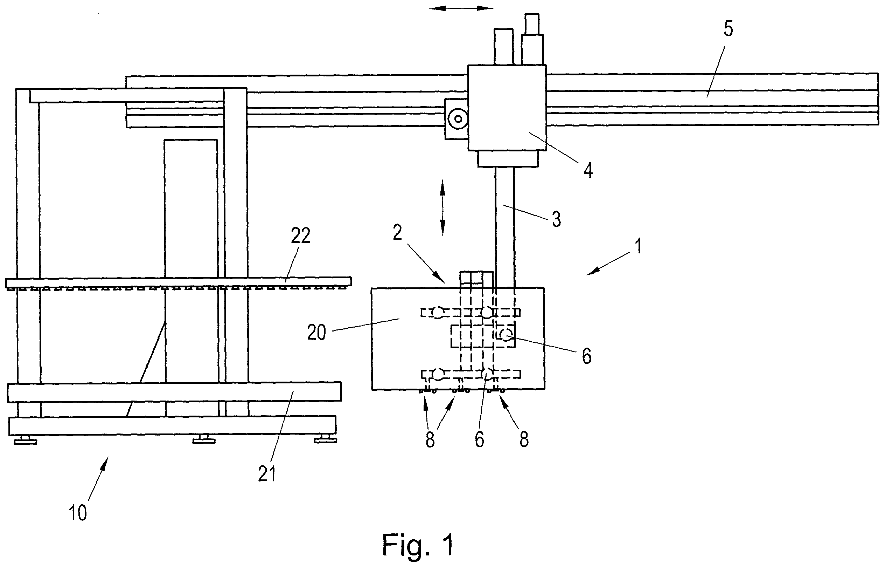

Wie aus Fig. 1 ersichtlich, ist die erfindungsgemäße Vorrichtung 1 dem Auslauf 10 einer Versiegelungsstation (nicht gezeigt) zugeordnet.

In dem gezeigten Beispiel ist im Auslauf 10 der Versiegelungsstation unten ein Kettenförderer 11 mit der aus der AT 384 596 B bekannten Bauart vorgesehen. Der obere Rand von Isolierglas-Rohlingen 20 wird von einem mit frei drehbaren Rollen 21 bestückten Balken 22 abgestützt, der gegenüber dem oberen Rand eines Isolierglas-Rohlings 20 durch Verstellen ausgerichtet werden kann. Auch dieser mit frei drehbaren Rollen 21 bestückte Balken 22 ist aus der AT 384 596 B an sich bekannt.

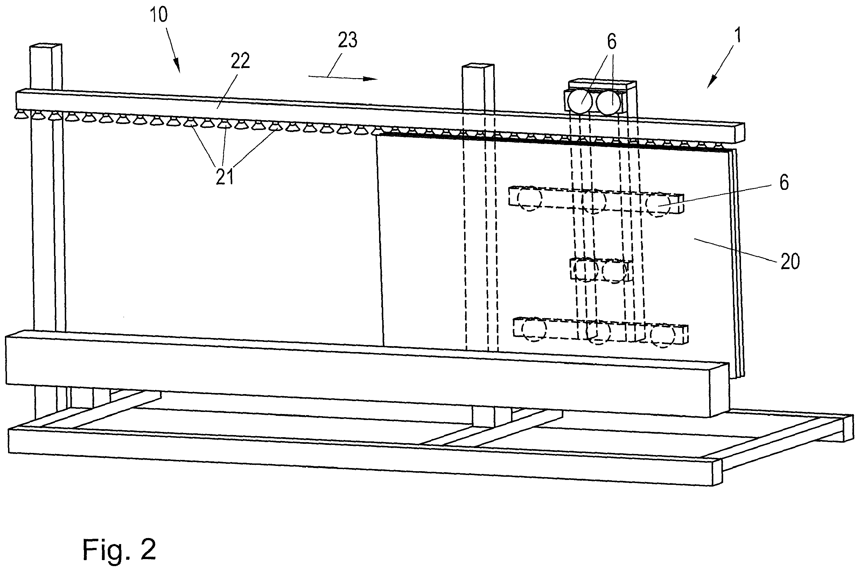

In Fig. 2 ist gezeigt, wie ein Isolierglas-Rohling 20 (für im Beispiel schematisch wiedergegebenes Dreifach-Isolierglas), nachdem seine Randfugen mit Versiegelungsmasse gefüllt worden sind, zum Ende des Auslaufes 10 bewegt worden ist. Fig. 2 zeigt auch, dass das Saugerfeld 2 in eine Stellung bewegt worden ist, in der es durch Beaufschlagen der Sauger 6 mit Unterdruck an den Isolierglas-Rohling 20 angelegt werden kann.

Sobald das Saugerfeld 2 an den Isolierglas-Rohling 20 angelegt worden ist und den Isolierglas-Rohling 20 hält, wird das Saugerfeld 2 nach rechts (Pfeil 23) der Fig. 2 bewegt und übernimmt den Isolierglas-Rohling 20 vom Auslauf 10 der Versiegelungsstation.

Das Saugerfeld 2 kann um eine im Wesentlichen horizontale und zur Ebene des Saugerfeldes 2 im Wesentlichen parallele Achse schwenkbar (kippbar) sein. Ein Schwenkbewegen oder Verkippen kann im Sinne einer Umlegebewegung bedeutsam sein, wenn ein (versiegelter) Isolierglas-Rohling 20 von einer bestimmten Neigung gegen die Vertikale, z.B. +6°, in eine andere Neigung gegen die Vertikale, z.B. -3°, gekippt werden soll, während er auf einen Bock abgestellt wird. Zum Anderen kann ein Verkippen im Sinne einer Aufkantbewegung nötig sein, wenn ein Isolierglas-Rohling 20, der mit horizontaler Unterkante aus der Versiegelungsstation ausläuft, in eine Lage gebracht wird, in der seine Unterkante dem Bock, wie er in Fig. 7 gezeigt ist, entspricht.

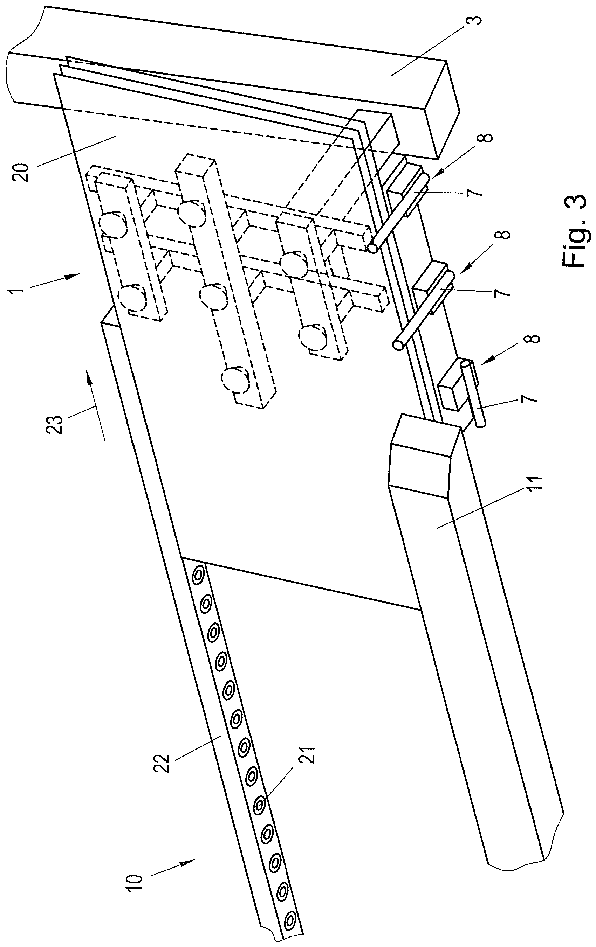

Wie Fig. 3 zeigt, werden die Stützfinger 7 in ihre Wirkstellung eingeschwenkt, sobald sie wegen der Bewegung des Saugerfeldes 2 vom Auslauf 20 weg neben dem Ende des unteren Förderers 11 des Auslaufes 10 der Versiegelungsstation angeordnet sind. So wird sichergestellt, dass die Glasscheibe (bei Zwei-Scheiben-Isolierglas) oder die Scheiben (bei Drei- oder Mehr-Scheiben-Isolierglas) des Isolierglas-Rohlings, an der/denen das Saugerfeld 2 nicht angreift, stets von unten her abgestützt ist/sind, sodass auf den Isolierglas-Rohling 20 keine Scherkräfte, die ein Verrutschen des Paketes aus Glasscheiben und Abstandhalter bewirken könnten, einwirken können.

Es ist in Betracht gezogen, den Arm 3 (oder das Saugerfeld 2 relativ zum Arm 3) zusätzlich zu den genannten Bewegungsfreiheitsgraden um eine im Wesentlichen lotrechte Achse drehbar auszubilden. Dies ist vorteilhaft, weil so Isolierglas-Rohlinge 20 nach dem Versiegeln in Abstellvorrichtungen eingebracht (eingestellt) werden können, in denen sie nicht parallel zur Laufebene stehen.

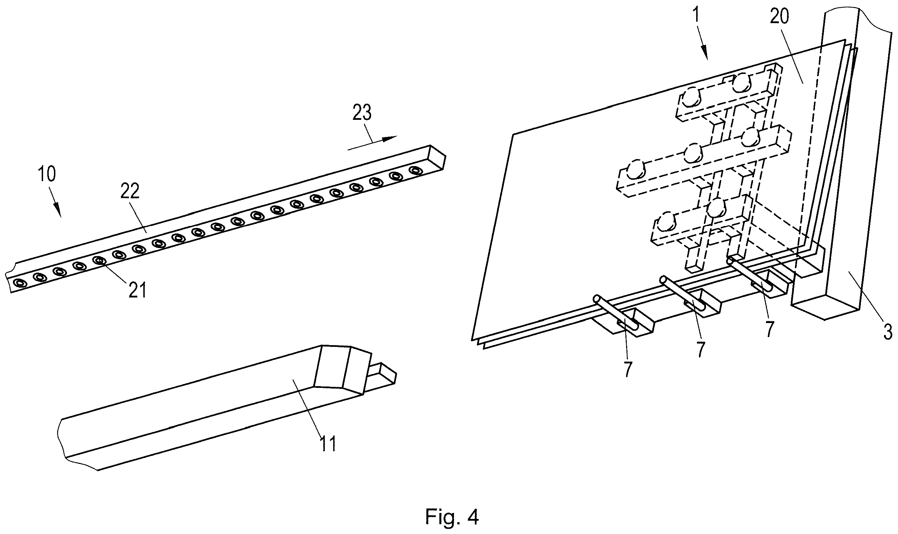

Sobald ein versiegelter Isolierglas-Rohling 20 wie in Fig. 4 gezeigt von dem Saugerfeld 2 übernommen und von unten her durch Abstützfinger 7 abgestützt ist, wird er vom Auslauf 10 der Versiegelungsstation weg und zu einem Speicher für Isolierglas-Rohlinge 20 bewegt und dort in einem Fächerwagen oder auf einem Lagerbock abgestellt, damit dort die Versiegelung aushärten kann.

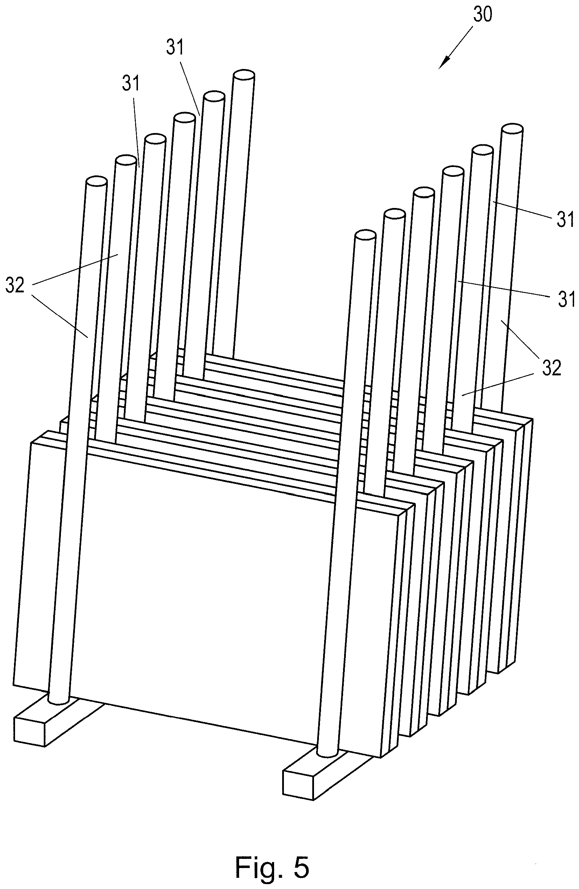

Ein Speicher für Isolierglas-Rohlinge 20 kann von wenigstens einem Fächerwagen 30 gebildet sein, wie er schematisch in Fig. 5 gezeigt ist. Der Fächerwagen 30 hat Fächer 31, die von Stäben 32 gebildet werden, die an ihren oberen Enden frei, also miteinander nicht verbunden, sind, sodass das Saugerfeld 2 mit einem Isolierglas-Rohling 20 von oben her in ein Fach 31 hineinbewegt werden kann. Ein Fächerwagen 30 kann ortsfest, auf Rädern frei verschiebbar oder auf Schienen verfahrbar ausgebildet sein. Nach dem Abstellen des Isolierglas-Rohlings 20 in einem Fach 31 werden die Stützfinger 7 in ihre Bereitschaftsstellung verschwenkt und das Saugerfeld 2 mit Stützfingern 7 der erfindungsgemäßen Vorrichtung 1 kann nach oben aus dem Fach 30 des Fächerwagens 30 herausbewegt werden.

Alternativ können versiegelte Isolierglas-Rohlinge 20 von der erfindungsgemäßen Vorrichtung 1 schonend auf einem Lagerbock 40 abgestellt werden, wie beispielsweise schematisch in den Fig. 6 und 7 gezeigt ist. Ein Lagerbock 40 kann ortsfest, auf Rädern frei verschiebbar oder auf Schienen verfahrbar ausgebildet sein. Der Lagerbock 40 besitzt in seinen Bereichen, an denen die Ränder von versiegelten Isolierglas-Rohlingen 20 anliegen, Stützelemente 42, die so angeordnet sind, dass das Saugerfeld 2 mit einem von ihm gehaltenen Isolierglas-Rohling 20 und in ihre Wirkstellung eingeschwenkten Stützfingern 7 in den Lagerbock 40 bewegt und der Isolierglas-Rohling 20 auf den Stützelementen 42 des Lagerbocks 40 abgestützt werden kann. Sobald ein Isolierglas-Rohling 20 eingestellt worden ist, werden im Lagerbock 40 vorgesehene seitliche Halteelemente 43 in Anlage an den Isolierglas-Rohling 20 (an dessen Außenseiten) angelegt.

Der Lagerbock 40 weist ein vertikal-horizontal L-förmiges Grundgestell auf, was neben der aus der Orthogonalen gekippten Form in Fig. 6 eine denkbare Option ist. Die Halteelemente 43 können zumindest teilweise verschiebbar und in verschiedenen Positionen arretierbar sein, damit die Halteelemente 43 für verschieden dicke Isolierglas-Rohlinge 20 verwendet werden können. Hiezu sind die Halteelemente 43 wenigstens auf einer Seite auf schrägen Führungen verschiebbar angeordnet. Dazu können die Halteelemente 43 so ausgeführt sein, dass sie in den Führungen 44 verschiebbar sind und so mit Federkraft belastet sind, dass sie sich an den eingestellten Isolierglas-Rohling 20 anlegen, um ihn seitlich zu stabilisieren. Es müssen nicht alle Halteelemente 43 verschiebbar sein, ausreichend ist es, wenn die Halteelemente 43 jeder zweiten vertikalen Reihe diese Eigenschaft besitzen. Sobald dies geschehen ist, können die Stützfinger 7 in ihre Bereitschaftsstellung verschwenkt und das Saugerfeld 2 der Vorrichtung 1 nach oben vom Lagerbock 40 wegbewegt werden.

Abgesehen von Fächerwagen 30 und Lagerböcken 40 der in Fig 5 bzw. 6 und 7 gezeigten Art können auch einfache Stapelböcke 50, wie sie in Fig. 8 dargestellt sind, verwendet werden. Auch die Stapelböcke 50 können ortsfest, auf Rädern frei verschiebbar oder auf Schienen verfahrbar ausgebildet sein. Im Stapelbock 50 sind Stützelemente 42 vorgesehen. Wie in Fig. 8 gezeigt, führt das Saugerfeld 2 beim Abstellen eines Isolierglas-Rohlings in den Stapelbock 50 eine Schwenkbewegung ("Kippbewegung") um eine im Wesentlichen horizontale und zur Ebene des Saugerfeldes 2 parallele Achse aus (beispielsweise von +6° auf -3°).

Die Schwenkbarkeit des Saugerfeldes 2 um eine im Wesentlichen horizontale und zu der Ebene des Saugerfeldes 2 wenigstens annähernd parallele Achse erlaubt es, mit dem vom Saugerfeld 2 gehaltenen und von den Stützfingern 7 abgestützten Gegenstand, z.B. einem Isolierglas-Rohling 20, ein Umlege-Verkippen (vgl. Fig. 8) auszuführen. Wenn das Saugerfeld 2 um eine zu seiner Ebene im Wesentlichen senkrechte Achse verdrehbar ist, kann es mit dem Gegenstand eine Aufkant-Verkipp-Bewegung ausführen, bei welcher der Gegenstand, z.B. ein Isolierglas-Rohling 20, um eine zu ihm normal stehende Achse verdreht wird.

Zusammenfassend kann ein Ausführungsbeispiel der Erfindung wie folgt beschrieben werden:
Für den Transport von plattenförmigen Gegenstaänden, wie Isolierglas-Rohlingen 20, beispielsweise vom Auslauf 10 einer Versiegelungsstation in einen von Fächerwagen 30 und/oder Lagerböcken 40 gebildeten Speicher, wird eine Vorrichtung 1 vorgeschlagen, die ein Saugerfeld 2 aufweist, das an einen Isolierglas-Rohling 20 anlegbar ist. Am unteren Rand des Saugerfeldes 2 sind Stützfinger 7 vorgesehen, die den vom Saugerfeld 2 gehaltenen Isolierglas-Rohling 20 von unten her abstützen, wobei die Stützfinger 7 unabhängig voneinander in ihre Wirkstellung verschwenkbar sind. Nach dem Abstellen eines Isolierglas-Rohlings 20 in einen Fächerwagen 30 oder auf einem Lagerbock 40 werden die Stützfinger 7 zurück in ihre Bereitschaftsstellung verschwenkt, sodass das Saugerfeld 2 nach oben aus dem Fächerwagen 30 bzw. dem Lagerbock 40 wegbewegt werden kann.

## Patentansprüche

1. Vorrichtung zum Herstellen von Isolierglas-Rohlingen (20) mit einer Versiegelungsstation und einer Vorrichtung (1) zum Transportieren der Isolierglas-Rohlinge (20), wobei die Vorrichtung (1) zum Transportieren ein Saugerfeld (2) aufweist und wobei das Saugerfeld (2) der Vorrichtung (1) für das Transportieren von Isolierglas-Rohlingen (20) dem Auslauf (10) der Versiegelungsstation zugeordnet ist, **gekennzeichnet durch** im Bereich des unteren Randes des Saugerfeldes (2) vorgesehene Stützelemente (8), wobei die Stützelemente (8) in ihre und aus ihrer Wirkstellung verstellbar sind, wobei die Stützelemente (8) unabhängig voneinander, beginnend mit dem der Versiegelungsstation benachbarten Stützelement nacheinander in ihre am unteren Rand eines Isolierglas-Rohlings (20) anliegende Wirkstellung verstellbar sind, sobald sie wegen der Bewegung des Saugerfeldes vom Auslauf (10) der Versiegelungstation weg neben dem Ende des unteren Förderers des Auslaufes der Versiegelungsstation angeordnet sind.

2. Vorrichtung nach Anspruch 1, **dadurch gekennzeichnet, dass** die Stützelemente (8) Stützfinger (7) umfassen.

3. Vorrichtung nach Anspruch 1 oder 2, **dadurch gekennzeichnet, dass** die Stützelemente (8), insbesondere die Stützfinger (7), durch Verschwenken aus ihrer Bereitschaftsstellung hinter der vom Saugerfeld (2) definierten Ebene in ihre Wirkstellung, in der sie zu der vom Saugerfeld (2) definierten Ebene quer stehen, beweglich sind.

4. Vorrichtung nach einem der Ansprüche 1 bis 3, **dadurch gekennzeichnet, dass** die Stützelemente (8) um im Wesentlichen lotrechte, zu der Ebene des Saugerfeldes (2) parallele Achsen verschwenkbar sind.

5. Vorrichtung nach einem der Ansprüche 1 bis 4, **dadurch gekennzeichnet, dass** das Saugerfeld (2) über einen Arm (3) und einen Schlitten (4) an einer horizontalen Schiene (5) mit Hilfe eines Antriebes verstellbar ist.

6. Vorrichtung nach Anspruch 5, **dadurch gekennzeichnet, dass** der Arm (3), der das Saugerfeld (2) trägt, im Schlitten (4) höhenverstellbar gehalten ist.

7. Vorrichtung nach einem der Ansprüche 1 bis 6, **dadurch gekennzeichnet, dass** das Saugerfeld (2) um eine im Wesentlichen horizontale und zur Ebene des Saugerfeldes (2) im Wesentlichen parallele Achse kippbar und/oder um eine im Wesentlichen lotrechte Achse und/oder um eine zur Ebene des Saugerfeldes (2) im Wesentlichen normale Achse drehbar ist.

8. Vorrichtung nach einem der Ansprüche 5, 6 und 7, **dadurch gekennzeichnet, dass** dem Schlitten (4) ein Antrieb zum Verfahren entlang der Schiene (5) zugeordnet ist.

## Claims

1. Device for producing insulating glass blanks (20), comprising a sealing station and a device (1) for transporting the insulating glass blanks (20), wherein the device (1) comprises a suction field (2) for transporting and wherein the suction field (2) of the device (1) is associated with the outlet (10) of the sealing station for the transport of insulating glass blanks (20), **characterized by** support elements (8) provided in the region of the lower edge of the suction field (2), wherein the support elements (8) are adjustable in and from their operating position, wherein the support elements (8) are successively adjustable independently from each other, beginning with the support element adjacent to the sealing station, in their operating position resting against the bottom edge of an insulating glass blank (20) as soon as they are arranged adjacent to the end of the lower conveyor of the outlet of the sealing station due to the movement of the suction field away from the outlet (10) of the sealing station.

2. Device according to claim 1, **characterized in that** the support elements (8) comprise support fingers (7).

3. Device according to claim 1 or 2, **characterized in that** the support elements (8), in particular the support fingers (7), are movable by pivoting from their standby position behind the plane defined by the suction field (2) into their operating position, in which they stand transversely to the plane defined by the suction field (2).

4. Device according to one of the claims 1 to 3, **characterized in that** the support elements (8) are pivotable about substantially perpendicular axes which are parallel to the plane of the suction field (2).

5. Device according to one of the claims 1 to 4, **characterized in that** the suction field (2) is adjustable on a horizontal rail (5) by means of a drive via an arm (3) and a carriage (4).

6. Device according to claim 5, **characterized in that** the arm (3) carrying the suction field (2) is held in a height-adjustable manner in the carriage (4).

7. Device according to one of the claims 1 to 6, **characterized in that** the suction field (2) is tiltable about an axis which is essentially horizontal and substantially parallel to the plane of the suction field (2) and/or is rotatable about a substantially vertical axis and/or about an axis which is substantially normal to the plane of the suction field (2).

8. Device according to one of the claims 5, 6 and 7, **characterized in that** the carriage (4) is associated with a drive for moving along the rail (5).

## Revendications

1. Dispositif pour fabriquer des ébauches de vitrage isolant (20) avec une station de scellement et un dispositif (1) pour le transport des ébauches de vitrage isolant (20), dans lequel le dispositif (1) de transport comporte un palonnier à ventouses (2) et dans lequel le palonnier à ventouses (2) du dispositif (1) pour le transport de ébauches de vitrage isolant (20) est associé à la sortie (10) de la station de scellement, **caractérisé en ce que** des éléments d'appui (8) sont prévus au niveau du bord inférieur du palonnier à ventouses (2), lesquels éléments d'appui (8) peuvent être déplacés dans et à partir de leur position active, les éléments d'appui (8) pouvant être déplacés indépendamment les uns des autres, en commençant par l'élément d'appui voisin de la station de scellement et l'un après l'autre, dans leur position active reposant sur le bord inférieur d'une ébauche de vitrage isolant (20) dès qu'ils sont disposés, du fait du mouvement du palonnier à ventouses s'éloignant de la sortie (10) de la station de scellement, près de l'extrémité du convoyeur inférieur de la sortie la station de scellement.

2. Dispositif selon la revendication 1, **caractérisé en ce que** les éléments d'appui (8) comprennent des pattes d'appui (7).

3. Dispositif selon la revendication 1 ou 2, **caractérisé en ce que** les éléments d'appui (8), en particulier les pattes d'appui (7), sont mobiles en pivotant de leur position de disponibilité derrière le plan défini par le palonnier à ventouses (2) à leur position active, dans laquelle ils se trouvent transversalement par rapport au plan défini par le palonnier à ventouses (2).

4. Dispositif selon l'une des revendications 1 à 3, **caractérisé en ce que** les éléments d'appui (8) peuvent pivoter autour d'axes sensiblement verticaux et parallèles au plan du palonnier à ventouses (2).

5. Dispositif selon l'une des revendications 1 à 4, **caractérisé en ce que** le palonnier à ventouses (2) peut être déplacé avec un bras (3) et un chariot (4) sur un rail horizontal (5) à l'aide d'un entraînement.

6. Dispositif selon la revendication 5, **caractérisé en ce que** le bras (3) qui porte le palonnier à ventouses (2) est retenu dans le chariot (4) avec possibilité de déplacement en hauteur.

7. Dispositif selon l'une des revendications 1 à 6, **caractérisé en ce que** le palonnier à ventouses (2) peut basculer autour d'un axe sensiblement horizontal et sensiblement parallèle au plan du palonnier à ventouses (2) et/ou peut tourner autour d'un axe sensiblement vertical et/ou autour d'un axe sensiblement perpendiculaire au plan du palonnier à ventouses (2).

8. Dispositif selon l'une des revendications 5, 6 et 7, **caractérisé en ce que** le chariot (4) est associé à un entraînement pour son déplacement le long du rail (5).
